# EUROPEAN PATENT APPLICATION

(11) **EP 1 046 563 A1**
(43) Date of publication of application: **25.10.2000**
(21) Application number: 00108567.9
(22) Date of filing: 19.04.2000
(51) Int. Cl.: B60T 13/58

(54) **"Control device for a brake assembly of a commercial vehicle"**

(30) Priority: 20.04.1999 IT TO990312
(71) Applicant: IVECO FIAT S.p.A., 10156 Torino (IT)
(72) Inventor: Gregori, Armando, 25043 Breno, Frazione Astrio (IT)
(74) Representative: Franzolin, Luigi

(57) **Abstract**

A control device (1) for a brake assembly (2) of a commercial vehicle, provided with a brake pedal (3) which is connected to a fixed structure (4) of the vehicle and which can move from a rest position over a control travel (C) to actuate a main brake device of the brake assembly (2), with an electric selector (6) comprising a movable member (7) available between an inoperative position and a plurality of operative positions of a retarder device (9) of the brake assembly (2), with a spring (11) acting on the movable member (7) of the selector (6) so as to move it towards the operative positions as a result of a movement of the pedal (3) from the rest position over a first portion (C1) of the control travel (C), in which the main brake device and the pedal (3) are operatively disconnected from one another, and means (22,29,30) for inhibiting the action exerted by the spring (11), actuated by the pedal (3) over a second portion (C2) of the control travel (C) succeeding the first portion (C1) so as to return the movable member (7) into the inoperative position.

## Description

The present invention relates to control device for a brake assembly of a commercial vehicle.

It is known that the brake assemblies of commercial vehicles essentially comprise a main or "service" brake device and a retarder device, which devices can be actuated independently of one another.

The main brake device is generally actuated by a brake pedal which can be actuated by the driver of the vehicle and which is adapted to generate braking torques proportional to the displacement of the pedal itself with respect to a rest position thereof.

The retarder device, however, is generally controlled in accordance with a plurality of modes of operation, to which braking torques of different degrees correspond, by a manually operated electric selector disposed inside the vehicle cab.

However, while the vehicle is being driven said electric selector is little used since it is a control which is not used instinctively by the driver; therefore, all the braking operations of the vehicle are dependent on the main braking device, with the obvious consequences which this may entail.

Moreover, the manual operation of said selector may distract the driver's attention from driving the vehicle.

With a view to obviating these drawbacks it has been proposed to incorporate the operation of the retarder device in the brake pedal. However, it this way it may happen that, during sudden braking under conditions of poor grip (for example with an unladen vehicle on a slippery or rutted road surface), the combined action of the braking torques generated by the main brake device and by the retarder device may induce a loss of grip and the locking of the rear wheels of the vehicle.

The object of the present invention is to devise a control device for a brake assembly of a commercial vehicle, which makes it possible to obviate the above-mentioned drawbacks in a simple and economic manner.

This object is achieved by the present invention in that it relates to a control device for a brake assembly of a commercial vehicle, said brake assembly comprising a main brake device and a retarder device, said control device comprising a brake pedal which is connected to a fixed structure of said vehicle and which can move from a rest position over a control travel to actuate said main brake device, at least one electric selector provided with a movable member available between an inoperative position and at least one operative position of said retarder device, and control means for moving said movable member of said selector between said inoperative and operative positions in response to actuation of said pedal, characterised in that said control travel comprises, starting from said rest position, a first portion, in which said main brake device and said pedal are operatively disconnected from one another, and in that said control means comprise pressure means acting on said movable member of said selector so as to move it towards said operative position as a result of a movement of said pedal from said rest position, and means for inhibiting the action exerted by said pressure means, actuated by said pedal over a second portion of said control travel succeeding said first portion so as to return said movable member into said inoperative position.

With a view to a better understanding of the present invention a preferred embodiment will be described non-restrictively by way of example below and with reference to the accompanying drawings, in which:
- Figures 1 to 3 illustrate, in side view and in three different operating conditions, a control device for a brake assembly of a commercial vehicle designed in accordance with the present invention and with parts omitted for clarity, and
- Figure 4 illustrates schematically an actuating system for a retarder device of the brake assembly connected to an electric selector of the control device in Figure 1.

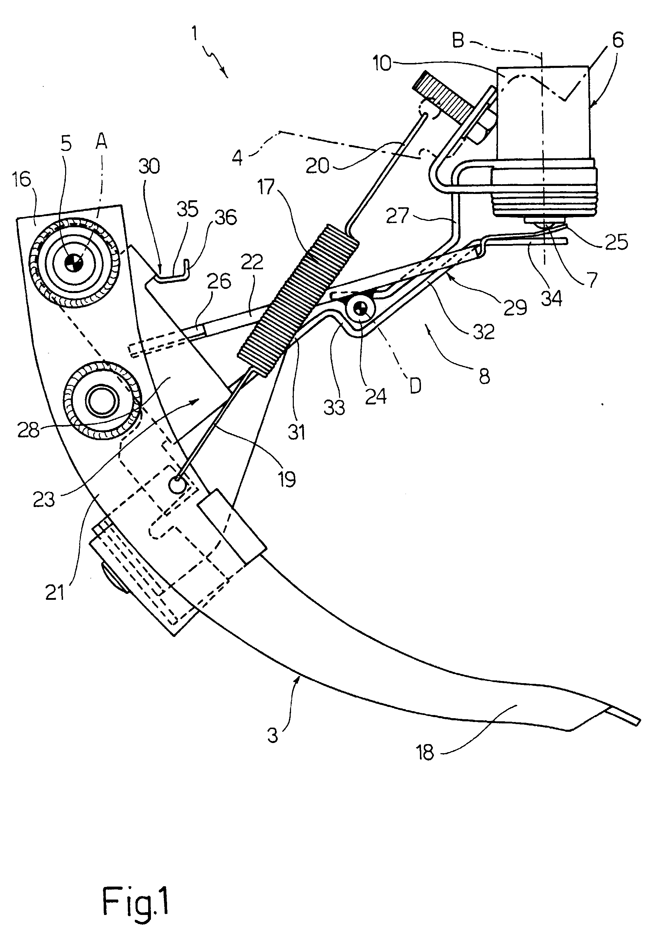

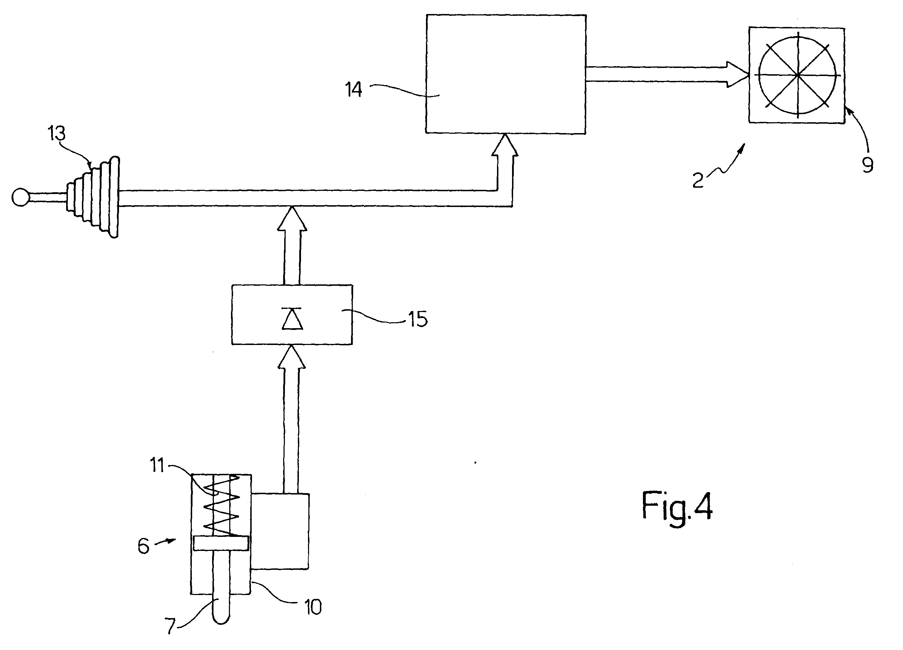

Referring now to Figures 1 to 3, the reference numeral 1 generally denotes a control device for a brake assembly 2 (of known type and only partly shown in Figure 4) of a commercial vehicle (not shown).

The device 1 comprises a brake pedal 3 connected to a fixed structure of the vehicle by means of a hinge 5 with an axis A and pivotable about the axis A itself from a rest position (Figure 1) over a control travel C so as to actuate a main brake device (known and not shown) of the brake assembly 2, and an electric linear selector 6 having an axis B orthogonal to the axis A and also carried by the structure 4 and comprising a movable member 7 controlled by the displacement of the pedal 3 via a transmission assembly 8 so as to actuate a retarder device 9 of the brake assembly 2 (Figure 4).

In particular, the movable member 7 is mounted to slide between a casing 10 fixed to the structure 4 and is loaded axially by a spring 11 (illustrated schematically in Figure 4) accommodated inside the casing 10 itself.

In alignment with the rest position of the pedal 3 the movable manner 7 is maintained, as a result of the interaction with the transmission assembly 8 (which will be described in detail below) and against the action of the spring 11, in an inoperative position of the retarder device 9 (Figure 1).

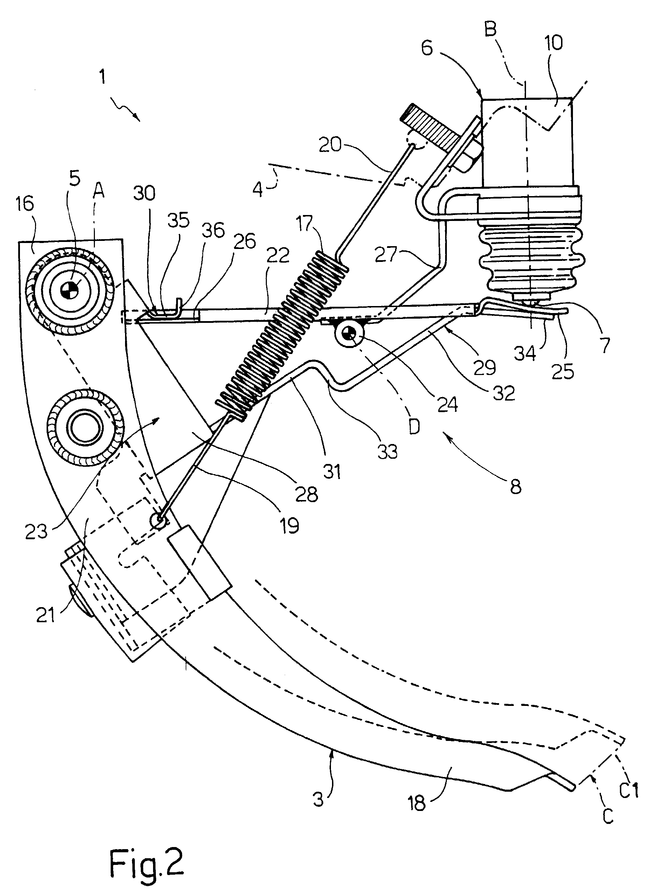

Under the pressure exerted by the spring 11 and starting from the inoperative position, the movable member 7 is adapted to close in succession three electrical contacts (of known type and not shown) defining respective operative positions of the retarder device 9 according to respective modes of operation, to which increasing braking torques correspond (Figure 2).

Referring now to Figure 4, the device 1 additionally comprises a further manually operated electric selector 13 of known type disposed inside the vehicle cab and connected to a plurality of power contactors 14, each of which is adapted to supply the retarder device 9 itself according to a respective mode of operation.

The selector 6 is connected to the power contactors 14 in parallel with respect to the selector 13 and via decoupling diodes 15.

Referring now to Figures 1 to 3, the pedal 3 is substantially of circumferential arc shape and is hinged to the structure 4 at the level of an upper end portion 16 thereof. The pedal 3 is maintained in the rest position both by the action of the brake servo and by the returning action of a cylindrical helical spring 17 extending transversely to the pedal 3 itself and can be operated under pressure against the elastic force exerted by the spring 17 at the level of an end portion 18 thereof opposite the portion 16.

In particular, the spring 17 has a first end portion 20 fixed to the structure 4 in the vicinity of the selector 6 and a second end portion 19 opposite thereto fixed to an intermediate portion 21 of the pedal 3.

Referring in particular to Figure 2, the travel C of the pedal 3 comprises, starting from the rest position, an initial idle portion C1, in which the main brake device and the pedal 3 are operatively disconnected from one another, and a successive portion C2, in which the main brake device exerts gradually increasing braking torques on the wheels of the vehicle proportionately to the degree of angular displacement of the pedal 3 itself.

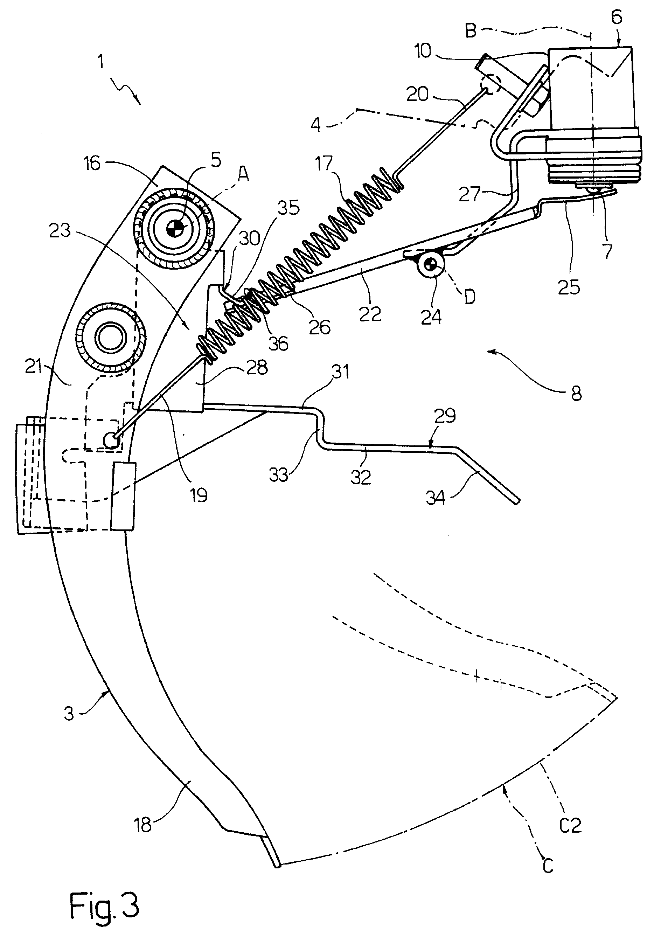

According to another aspect of the present invention (Figures 1 to 3), the transmission assembly 8 comprises a rocker lever 22 interposed between the pedal 3 and the selector 6 and available between a first configuration (Figures 1 and 3) and a second configuration (Figure 2), in which it defines respectively the inoperative position and operative position at the end of travel of the movable member 7, and an actuating member 23 carried by the pedal 3 and co-operating with the lever 22 so as to displace it from the first configuration into the second configuration over the portion C1 of the travel C of the pedal 3 and from the second configuration into the first configuration over the portion C2 of the travel C thereof.

In particular, the lever 22 is attached in an intermediate position to the structure 4 by means of a hinge 24 having an axis D parallel to the axis A and it has a first end 25 co-operating with the movable member 7 of the selector 6 and substantially L-shaped, and a second end 26 adjacent the pedal 3 in the vicinity of the portion 16.

More precisely, the hinge 24 is provided between the lever 22 and a bracket 27 protruding from the casing 10 of the selector 6.

In the first configuration (Figures 1 and 3), the lever 22 is disposed obliquely relative to the axis B and with its end 25 it maintains the movable member 7 of the selector 6 in the inoperative position. In the second configuration (Figure 2), the lever 22 is disposed orthogonally to the axes A and B and defines with its end 25 an abutment for the movable member 7 of the selector 6 urged by the spring 11 into its third, operative position.

The actuating member 23 comprises a bracket 28 securely attached to the portions 16 and 21 of the pedal 3, and first and second actuating arms 29, 30 which project from the bracket 28 and co-operate with the respective ends 25,26 of the lever 22 respectively over the portions C1 and C2 of the travel C so as to bring about the displacement of the lever 22 itself between the first and second operative configurations thereof.

In particular, the arm 29 extends from the bracket 28 in an intermediate position between the arm 30 and the position 18 of the pedal 3, and is of substantially greater length than the length of the arm 30 itself.

The arm 29 comprises two parallel straight portions 31,32, one of which (31) extends from the bracket 28 and is connected to the other portion (32) by a straight section 33 orthogonal to the portions 31,32 themselves, and a straight end extension 34 extending obliquely from the portion 32 and adapted to co-operate in operation with the end 25 of the lever 22.

The arm 30 is substantially L-shaped and comprises a first straight section 35 extending from the bracket 28 and disposed orthogonally to the axes A and B at the end of the portion C1 of the travel C of the pedal 3, and a second, end section 36 extending orthogonally to the section 35.

At the level of the rest position of the pedal 3 (Figure 3), the extension 34 of the arm 29 acts on the end 25 of the lever 22 against the action of the spring 11 of the selector 6 so as to arrange the lever 22 itself in the first configuration and, therefore, the movable member 7 in its inoperative position.

As a result of the displacement of the pedal 3 over the portion C1 of the travel C, the extension 34 of the arm 29 is gradually disengaged from the end 25 of the lever 22 so as enable under the pressure of the spring 11, the movable member 7 of the selector 6 to be displaced into the operative positions and, therefore, the lever 22 itself to attain its second configuration.

The arm 30 defines an abutment for the end 26 of the lever 22 at the end of the portion C1 of the travel C of the pedal 3 and it interacts with the lever 22 itself over the portion C2 of the travel C, counter to the action of the spring 11, so as to return the lever 22 into the first configuration and the movable member 7 of the selector 6 into the inoperative position.

The mode of operation of the control device 1 will be described starting from the condition in Figure 1, in which the pedal 3 is maintained in the rest position by the spring 17 and by the action of the brake servo, the lever 22 is urged by the interaction with the extension 34 of the arm 29 of the actuating member 23 into its first configuration and it maintains the movable member 7 of the selector 6 in the inoperative position.

Acting on the pedal 3 so as to rotate it over the initial portion of the travel C brings about the simultaneous rotation of the arm 29 about the axis A, the end extension 34 of which arm, because of the conformation and displacement of the actuating member 23, is displaced substantially along the axis B in the thrust direction of the spring 11 of the selector 6. In this way the arm 29 is gradually disengaged from the lever 22 and the movable member 7 successively reaches the various operative positions; the axial displacement of the movable member 7 brings about, as a result of the interaction with the end 25, the rotation of the lever 22 in a clockwise direction in Figure 2 about the axis D from the first to the second configuration, in which it is disposed substantially orthogonal to the axes A and B and abutting with its end 26 against the section 35 of the arm 30.

During said axial displacement, the movable member 7 successively closes the electrical contact associated therewith thereby actuating, via the respective power contacts 14, the retarder device 9 according to the respective modes of operation.

In this phase the main brake device is practically inoperative.

By continuing to act on the pedal 3 so as to displace it further over its travel C (Figure 3), the lever 22 is subject at its opposite ends 25,26 to counteracting torques generated by the elastic force of the spring 11 and by the thrust action of the arm 30 as a result of the rotation of the pedal 3 itself. The torque generated by the thrust action of the arm 30 is predominant with respect to the torque generated by the elastic force of the spring 11 and, therefore, induces the rotation of the lever 22 about the axis D in an anti-clockwise direction in Figures 1 and 3 from the second to the first configuration.

In this phase the retarder device 9 is thus inoperative, whereas the main brake device is operative.

The advantages which can be achieved with the present invention are evident from a study of the features of the control device 1 designed in accordance therewith.

In particular, the main brake device and the retarder device 9 are both actuated by the operation of the brake pedal 1 over different portions (C1,C2) of the control travel C thereof. In fact, as a result of the combined actions of the spring 11 and of the arms 29,30 on the lever 22, the movable member 7 of the selector 6 is displaced from the inoperative position into the operative position over the initial portion C1 of the travel C of the pedal 3, i.e. when the main brake device is inoperative, and it is returned to the inoperative position over the successive portion C2 of the travel C of the pedal 3, i.e. when the main brake device is operative. In this way, during sudden braking under conditions of poor grip (with an unladen vehicle on a slippery or rutted road surface), the danger is obviated that braking torques exerted by the main brake device and by the retarder device 9 will combine to induce the locking of the rear wheels of the vehicle.

It is evident that the control device 1 can be subject to modifications and variations without departing from the scope of protection defined by the claims.

## Claims

1. A control device (1) for a brake assembly (2) of a commercial vehicle, said brake assembly (2) comprising a main brake device and a retarder device (9), said control device (1) comprising a brake pedal (3) which is connected to a fixed structure (4) of said vehicle and which can move from a rest position over a control travel (C) to actuate said main brake device, at least one electric selector (6) provided with a movable member (7) available between an inoperative position and at least one operative position of said retarder device (9, and control means (11,22,29,30) for moving said movable member (7) of said selector (6) between said inoperative and operative positions in response to actuation of said pedal (3), characterised in that said control travel (C) comprises, starting from said rest position, a first portion (C1), in which said main brake device and said pedal (3) are operatively disconnected from one another, and in that said control means comprise pressure means (11) acting on said movable member (7) of said selector (6) so as to move it towards said operative position as a result of a movement of said pedal (3) from said rest position, and means (22,29,30) for inhibiting the action exerted by said pressure means (11), actuated by said pedal (3) over a second portion (C2) of said control travel
(C) succeeding said first portion (C1) so as to return said movable member (7) into said inoperative position.

2. A device according to claim 1, characterised in that said inhibiting means comprise at least one transmission element (22) interposed between said pedal (3) and said selector (6) and available between a first and a second operative configuration, in which it defines respectively said inoperative and operative positions of said movable member (7), and actuating means (29,30) carried by said pedal (3) and co-operating with said transmission element (22) so as to displace it from said first configuration into said second configuration over said first portion (C1) of said control travel (C) in accordance with the action exerted by said pressure means (11), and from said configuration into said first configuration over said second portion (C2) of the control travel (C) itself counter to the action exerted by said pressure means (11).

3. A device according to claim 1 or 2, characterised in that said selector (6) is linear-type selector.

4. A device according to any one of the preceding claims, characterised in that said pedal (3) has an end portion (16) connected to said structure (4) by means of a hinge (5), and in that said control travel (C) is defined by an angular displacement of said pedal (3) about an axis (A) of said hinge (5).

5. A device according to claim 3 or 4, characterised in that said transmission element (22) is a rocker lever hinged in an intermediate position to said structure (4) and having a first end (25) co-operating with said movable member (7) of said selector (6), said actuating means comprising:
- first interacting means (29) acting on said first end (25) of said transmission element (22) against the action of said pressure means (11) so as to arrange said transmission element (22) itself in said first configuration in alignment with said rest position of said pedal (3) and able to be gradually disengaged from said transmission element (22) during the displacement of said pedal (3) over said first portion (C1) of said control travel (C), and
- second interacting means (30) co-operating with a second end (26) of said transmission element (22) over said second portion (C2) of said control travel (C) of said pedal and counter to the action of said pressure means (11) so as to return said transmission element (22) itself into said first configuration.

6. A device according to claim 5, characterised in that said first and second interacting means are defined respectively by a first and second arm (29,30) angularly attached to said pedal (3) and co-operating on opposite sides with said transmission element (22).

7. A device according to claim 6, characterised in that said first and second arms (29,30) project from a bracket (23) securely attached to said pedal (30).

8. A device according to any one of the preceding claims, characterised in that said pressure means comprise elastic means (11) acting on said movable member (7) of said selector (6) so as to urge towards said operative position.

9. A device according to any one of the preceding claims, characterised in that said movable member (7) of said selector (6) is available in a plurality of said operative positions so as to actuate said retarder device (9) according to respective modes of operation.

10. A device according to any one of the preceding claims, characterised by comprising a second manually operated electric selector (13) disposed inside the vehicle cab and operating in parallel with respect to said first selector (6) so as to actuate said retarder device (9).
